# DEMANDE DE BREVET EUROPEEN

(11) **EP 4 765 049 A1**
(43) Date de publication de la demande: **24.06.2026**
(21) Numéro de dépôt: 25223934.8
(22) Date de dépôt: 16.12.2025
(51) Int. Cl.: G06V 20/56, G06V 10/80, G06V 10/26, G06V 10/82, G01S 17/931, G06T 7/11

(54) **PROCÉDÉ DE SEGMENTATION SÉMANTIQUE D'UN ENVIRONNEMENT D'UN VÉHICULE AUTOMOBILE**

(30) Priorité: 19.12.2024 FR 2414775
(71) Demandeur: Ampere SAS, 92100 Boulogne-Billancourt (FR)
(72) Inventeur: CORTES, Irene, 28108 Madrid (ES); GUINDEL, Carlos, 28108 Madrid (ES); JIMENEZ, Dario, 28108 Madrid (ES); MADRIDANO, Angel, 28108 Madrid (ES)
(74) Mandataire: Renault Group

(57) **Abrégé**

Procédé de segmentation sémantique comprenant :
- une acquisition par la caméra (201), d'une image représentant une zone de l'environnement du véhicule (100), et une acquisition par le lidar (202), d'un nuage de points dans ladite zone,
- une attribution d'un premier vecteur de classes à chaque pixel de l'image, associant un indice de confiance à chaque classe d'un ensemble, et
- une attribution d'un deuxième vecteur de classes à chaque point du nuage de points, associant un deuxième indice de confiance à chaque classe de l'ensemble,
- une association de chaque point du nuage à un pixel de l'image, puis,
- une attribution d'un troisième vecteur de classes à chaque point du nuage, le troisième vecteur étant le premier vecteur ou le deuxième vecteur ou un vecteur comprenant un troisième indice de confiance indiquant quels vecteurs de classes sont corrects.

## Description

L'invention concerne un procédé de segmentation sémantique d'un environnement d'un véhicule automobile. L'invention porte encore sur un dispositif de segmentation sémantique d'un environnement d'un véhicule automobile. L'invention porte également sur un programme d'ordinateur mettant en œuvre le procédé mentionné. L'invention porte enfin sur un support d'enregistrement sur lequel est enregistré un tel programme.

Les véhicules automobiles analysent leur environnement afin de détecter et catégoriser les éléments qui les entourent, notamment des véhicules, des personnes, des bâtiments, des panneaux de signalisation. Pour cela, les véhicules automobiles sont équipés de capteurs aptes à capturer des représentations d'un environnement du véhicule, les capteurs pouvant être, par exemple, une ou plusieurs caméras et un Lidar. On met alors en œuvre une segmentation sémantique des images issues des capteurs, comprenant, par exemple, une association d'une étiquette sémantique à chaque pixel d'une image issue d'une caméra, et/ou à chaque point d'un nuage de points d'un Lidar.

Toutefois, la représentation de l'environnement du véhicule automobile obtenue à partir d'une segmentation sémantique d'une image issue d'une caméra présente des inconvénients, notamment parce qu'une telle image ne représente que deux dimensions. De même, la représentation de l'environnement du véhicule obtenue à partir de la segmentation sémantique d'un nuage de points en trois dimensions issu d'un lidar présente des inconvénients, en particulier parce que le lidar est une technologie plus récente que la caméra, et les traitements de données issues des lidars sont moins développés que les traitements de données issues des caméras.

Le but de l'invention est de fournir un procédé de segmentation sémantique d'un environnement d'un véhicule automobile qui soit simple à implémenter, et qui remédie aux inconvénients d'une segmentation sémantique d'une image issue d'une caméra et d'une segmentation sémantique d'un nuage de points en trois dimensions issu d'un lidar.

A cet effet, l'invention porte sur un procédé de segmentation sémantique d'un environnement d'un véhicule automobile équipé d'un ensemble de capteurs comprenant au moins un lidar et une caméra, le procédé comprenant les étapes suivantes :
- une étape d'acquisition par la caméra, d'une image représentant une zone donnée de l'environnement du véhicule, et d'acquisition par le lidar, d'un nuage de points dans ladite zone donnée, chaque point du nuage de points étant associé à des coordonnées tridimensionnelles, puis
- une étape de première segmentation sémantique de l'image, comprenant une attribution d'un premier vecteur de classes à chaque pixel de l'image, le premier vecteur de classes associant un premier indice de confiance à chaque classe d'un ensemble donné de classes, et
- une étape de deuxième segmentation sémantique du nuage de points, comprenant une attribution d'un deuxième vecteur de classes à chaque point du nuage de points, le deuxième vecteur de classes associant un deuxième indice de confiance à chaque classe de l'ensemble donné, puis
- une étape d'association de chaque point donné du nuage de points à un pixel de l'image correspondant au point donné, puis,
- une étape de troisième segmentation sémantique de l'environnement du véhicule automobile, comprenant une attribution d'un troisième vecteur de classes à chaque point du nuage de points, le troisième vecteur de classes étant le premier vecteur de classes ou le deuxième vecteur de classes ou un vecteur comprenant un troisième indice de confiance indiquant si les premier et deuxième vecteurs de classes sont corrects, un quatrième indice de confiance indiquant si aucun des premier et deuxième vecteurs de classes sont corrects, un cinquième indice de confiance indiquant si seul le premier vecteur de classes est correct, et un sixième indice de confiance indiquant si seul le deuxième vecteur de classes est correct, l'attribution étant réalisée à partir d'un ensemble de données comprenant pour chaque point du nuage de points, les coordonnées tridimensionnelles associées au point, le premier vecteur de classe correspondant au pixel associé au point et le deuxième vecteur de classe correspondant au point.

Dans un mode de réalisation, l'étape de troisième segmentation sémantique est mise en œuvre par un algorithme, notamment un réseau de neurones convolutifs.

Dans un mode de réalisation, l'étape de première segmentation sémantique et l'étape de deuxième segmentation sémantique sont exécutées indépendamment l'une de l'autre et/ou en parallèle l'une de l'autre.

Avantageusement,
- l'étape de première segmentation sémantique comprend la mise en œuvre d'un premier algorithme de segmentation sémantique, et
- l'étape de deuxième segmentation sémantique comprend la mise en œuvre d'un deuxième algorithme de segmentation sémantique, différent du premier algorithme.

Dans un mode de réalisation, le premier algorithme met en œuvre un premier réseau de neurones convolutifs, et/ou le deuxième algorithme met en œuvre un deuxième réseau de neurones convolutifs différent du premier réseau de neurones convolutifs.

Dans un mode de réalisation, le nuage de points est réparti dans une grille tridimensionnelle de voxels, chaque voxel de la grille définissant un volume apte à contenir plusieurs points du nuage de points issu du lidar,
et/ou l'étape de troisième segmentation sémantique prend en compte une cohérence des vecteurs de classes respectivement associés aux points situés dans un même voxel.

Dans un mode de réalisation, l'étape d'association de chaque point donné du nuage de points à un pixel de l'image correspondant au point donné comprend un étalonnage de paramètres intrinsèques de la caméra mettant en œuvre un algorithme basé sur le modèle de sténopé, l'étalonnage des paramètres intrinsèques de la caméra comprenant
- une pluralité de captures, par la caméra, d'images d'un objet comprenant une pluralité de points dont les coordonnées sont connues, puis
- une détermination, à partir des images capturées, d'une matrice dite de caméra contenant une distance focale de la caméra, des centres optiques de la caméra et des coefficients de distorsion de la caméra.

L'invention porte en outre sur un dispositif de segmentation sémantique d'un environnement d'un véhicule automobile équipé d'un ensemble de capteurs comprenant un lidar et une caméra,
le dispositif comprenant des éléments matériels et/ou logiciels mettant en œuvre le procédé selon l'invention.

L'invention porte en outre sur un produit programme d'ordinateur comprenant des instructions de code de programme enregistrées sur un support lisible par ordinateur pour mettre en œuvre les étapes du procédé selon l'invention lorsque ledit programme fonctionne sur un ordinateur.

L'invention porte en outre sur un véhicule automobile comprenant un dispositif selon l'invention.

Les dessins annexés représentent, à titre d'exemple, un mode de réalisation d'un dispositif de segmentation sémantique d'un environnement d'un véhicule automobile selon l'invention et un mode d'exécution d'un procédé de segmentation sémantique d'un environnement d'un véhicule automobile selon l'invention.
La [Fig.1] représente schématiquement un véhicule automobile équipé d'un dispositif de segmentation sémantique d'un environnement d'un véhicule automobile selon l'invention.
La [Fig.2] illustre des étapes de première segmentation sémantique et deuxième segmentation sémantique selon l'invention.
La [Fig.3] illustre une association entre un point donné d'un nuage de points issu d'un lidar et un pixel d'une image issue d'une caméra représentant le point donné.
La [Fig.4] illustre une pluralité d'associations entre un point donné d'un nuage de points issu d'un lidar et un pixel d'une image issue d'une caméra représentant le point donné.
La [Fig.5] illustre une étape de troisième segmentation sémantique selon l'invention.

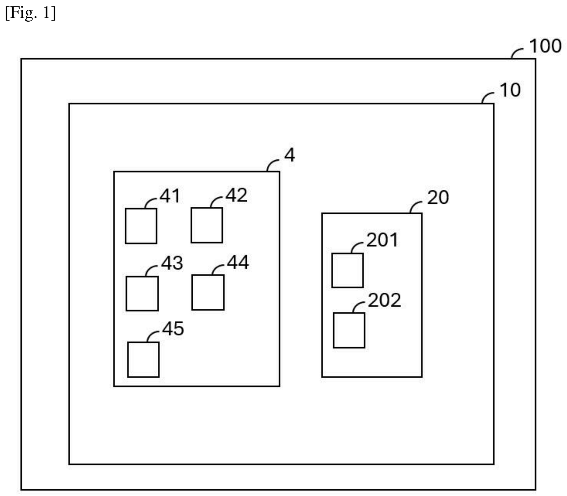

Un exemple d'un véhicule automobile 100 équipé d'un dispositif 10 de segmentation sémantique d'un environnement du véhicule automobile 100 est décrit ci-après en référence à la [Fig.1].

L'invention est avantageusement destinée à des véhicules équipés de systèmes d'aide à la conduite, comme par exemple un système de freinage d'urgence, les systèmes d'aide à la conduite pouvant avantageusement utiliser les informations fournies par le dispositif 10 selon l'invention.

Dans la suite du document, le terme « segmentation sémantique » désigne une technique de traitement d'images (notamment issues d'une caméra) et/ou d'un nuage de points issus d'un lidar. La segmentation sémantique comprend une classification selon un ensemble donné de classes, de pixels d'une image et/ou de points d'un nuage de points. Ainsi, dans ce document, le terme « segmentation sémantique » ne fait pas référence à un traitement en lien avec le langage.

En d'autres termes, le terme « segmentation sémantique » fait référence à un processus qui consiste à associer un vecteur de classes à chaque pixel d'une image ou à chaque point d'un nuage de points issu d'un lidar ou à chaque voxel d'une grille dans laquelle sont répartis les points du nuage de point.

Dans le contexte de l'invention, le terme « classes » fait référence à des catégories d'items qui sont susceptibles d'être présents dans l'environnement du véhicule automobile. Par exemple, dans un mode de réalisation, l'ensemble donné de classes comprend les classes suivantes : « ignorer », « personne », « voiture », « vélo », « camion », « moto », « bâtiment », « route », « trottoir », « barrière », « végétation », « poteau », « panneau de signalisation ».

Dans la suite du document, le terme « vecteur de classe » désigne une structure de données associant un indice de confiance à chaque classe de l'ensemble donné de classes. Ainsi, l'association d'un vecteur de classes à chaque pixel d'une image ou chaque point d'un nuage de points permet d'évaluer, pour chaque classe donnée, une probabilité que le pixel ou le point représente un élément de la classe donnée.

Ainsi, contrairement à un traitement de détection d'objets, qui identifie seulement les contours et la présence d'objets, la segmentation sémantique permet d'attribuer un vecteur de classes à chaque pixel d'une image ou chaque point d'un nuage de points pour indiquer le type d'objet ou de matériau qu'il représente.

Le véhicule automobile 100 peut être un véhicule de tout type, par exemple un véhicule de tourisme ou un véhicule utilitaire.

Le dispositif 10 comprend un ensemble 20 de capteurs comprenant au moins une caméra 201 disposée à l'avant du véhicule. Préférentiellement, l'ensemble de capteurs comprend au moins deux caméras, voire au moins trois caméras. Dans un mode de réalisation, les caméras 201 peuvent être disposées à l'avant et/ou à l'arrière du véhicule automobile 100. Chaque caméra 201 génère des images RVB en deux dimensions d'une zone de l'environnement située dans le champ de ladite caméra.

L'ensemble de capteurs 20 comprend en outre au moins un lidar 202 qui génère un nuage de points en trois dimensions. Dans un mode de réalisation préférentiel, le capteur lidar 202 est un capteur multiplan couvrant au moins seize plans.

De plus, la portée du lidar 202 selon un plan horizontal est supérieure ou égale à la portée des caméras 201 de l'ensemble de capteurs 20. En d'autres termes, le champ de vision des caméras 201 est couvert par le nuage de points généré par le lidar 202.

Le procédé selon l'invention peut être appliqué selon de nombreuses configurations différentes de champs de vision horizontaux (FOV) du lidar, à la condition que la portée de l'au moins une caméra soit couverte par le champ de vision horizontal du lidar. En d'autres termes, le procédé selon l'invention ne sera applicable qu'à une zone couverte simultanément par la portée de l'au moins une caméra et la portée du lidar.

Dans un mode de réalisation de l'invention, les points du lidar peuvent être répartis dans une grille de voxels, chaque voxel de la grille définissant un volume pouvant contenir plusieurs points du nuage de points. Par exemple, chaque voxel peut être de forme cubique.

Dans la suite du document, on considère que les traitements appliqués au nuage de points issus du lidar peuvent, en complément ou alternativement, être appliqués à des voxels de la grille, chaque voxel pouvant contenir plusieurs points du nuage de points.

Le dispositif 10 comprend par ailleurs un microprocesseur 4. Le microprocesseur 4 est apte à recevoir et traiter des données issues de la caméra 201 et du lidar 202. Dans un mode de réalisation alternatif, le dispositif 10 pourrait comprendre plusieurs microprocesseurs 4 et les données issues de la caméra 201 d'une part, et du lidar 202 d'autre part, peuvent être traitées sur deux microprocesseurs 4 distincts. De même, les différentes étapes de traitement décrites ci-après peuvent être exécutées sur différents microprocesseurs qui communiquent entre eux.

Dans un mode de réalisation, le microprocesseur 4 est connecté aux capteurs (caméra 201 et lidar 202) par l'intermédiaire d'un réseau de communication, par exemple un réseau Ethernet.

Le dispositif 10, et particulièrement le microprocesseur 4, permettent la mise en œuvre d'un procédé de segmentation sémantique d'un environnement d'un véhicule automobile.

Le microprocesseur 4 permet la mise en œuvre des modules 41, 42, 43, 44, 45 suivants :
- un module 41 d'acquisition d'une image issue d'une caméra représentant une zone donnée de l'environnement du véhicule, et d'acquisition d'un nuage de points issus du lidar représentant ladite zone donnée, ,
- un module 42 de première segmentation sémantique de l'image,
- un module 43 de deuxième segmentation sémantique du nuage de points,
- un module 44 d'association de chaque point donné du nuage de points à un pixel de l'image représentant le point donné, puis
- une module 45 de troisième segmentation sémantique de l'environnement du véhicule.

Le véhicule automobile 100, en particulier le dispositif 10 de segmentation sémantique d'un environnement d'un véhicule automobile, comprend de préférence tous les éléments matériels et/ou logiciels configurés de sorte à mettre en œuvre le procédé défini dans l'objet de l'invention ou le procédé décrit plus bas.

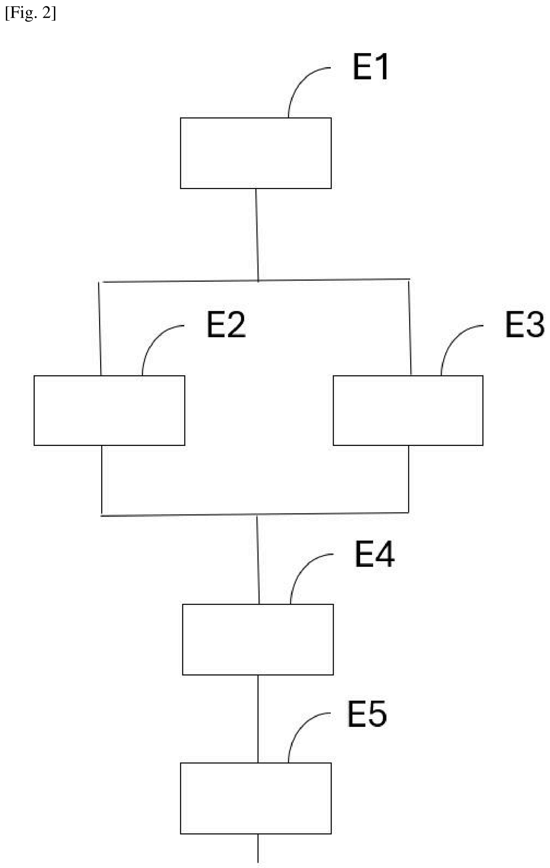

Un mode d'exécution du procédé de segmentation sémantique d'un environnement d'un véhicule automobile est décrit ci-après en référence aux figures 1 à 5. Dans le mode de réalisation représenté par les figures 1 à 5, le procédé comprend cinq étapes E1 à E5.

Dans l'étape E1, on acquiert :
- un nuage de points issus du lidar 202 représentant une zone donnée de l'environnement du véhicule,
- une image issue de la caméra 201 représentant ladite zone donnée de l'environnement du véhicule.

Dans la suite du document, l'expression « zone donnée » désigne une portion de l'environnement du véhicule automobile 100 qui est couverte à la fois par le lidar et par la caméra, le procédé selon l'invention n'étant applicable qu'à une telle zone.

Dans un mode de réalisation, le nuage de points peut en outre être réparti dans une grille tridimensionnelle de voxels.

Puis on enchaine sur les étapes E2 de première segmentation sémantique et E3 de deuxième segmentation sémantique,
- la première segmentation sémantique de l'image comprenant une attribution d'un premier vecteur de classes V1 à chaque pixel de l'image, le premier vecteur de classes V1 associant un premier indice de confiance à chaque classe de l'ensemble donné de classes, et
- la deuxième segmentation sémantique du nuage de points comprenant une attribution d'un deuxième vecteur de classes V2 à chaque point donné du nuage, le deuxième vecteur de classes V2 associant un deuxième indice de confiance à chaque classe de l'ensemble donné de classes.

Ainsi, dans les étapes E2 et E3 du procédé selon l'invention, les images issues de la caméra et les nuages de points issus du lidar sont traités indépendamment pour obtenir deux représentations sémantiquement segmentées distinctes de la zone donnée située dans l'environnement du véhicule automobile.

Différents algorithmes de segmentation sémantique peuvent être utilisés pour mettre en œuvre la première et la deuxième segmentation, à la condition qu'ils puissent fournir un indice de confiance associé à l'étiquette sémantique.

Avantageusement, l'étape de première segmentation sémantique et l'étape de deuxième segmentation sémantique sont exécutées indépendamment l'une de l'autre et/ou en parallèle l'une de l'autre.

Préférentiellement,
- l'étape E2 de première segmentation sémantique comprend la mise en œuvre d'un premier algorithme de segmentation sémantique, et
- l'étape E3 de deuxième segmentation sémantique comprend la mise en œuvre d'un deuxième algorithme de segmentation sémantique, différent du premier algorithme.

Dans un mode de réalisation, le premier algorithme met en œuvre un premier réseau de neurones convolutifs, notamment le premier algorithme étant Deeplab V3+ ou InternImage ou SERNet-Former.

De plus, le deuxième algorithme met en œuvre un deuxième réseau de neurones convolutifs différent du premier réseau de neurones convolutifs, notamment le deuxième algorithme étant Cylinder3D ou SqueezeV3 ou PVKD.

Plus généralement, les algorithmes mettant en œuvre des réseaux de neurones profonds sont naturellement adaptés pour réaliser une segmentation sémantique. Le choix des modèles utilisés détermine d'une part la fiabilité de la segmentation sémantique et d'autre part la réactivité du système. Le choix des algorithmes est donc guidé par un compromis entre la précision et la vitesse.

Puis on enchaine sur une étape E4 d'association de chaque point donné du nuage de points à un pixel de l'image représentant le point donné.

En préambule, les étalonnages des caméras 201 et du lidar 202 sont réalisés, notamment afin de pouvoir corréler chaque point d'une image en deux dimensions issues de l'une des caméras 201 avec un point du nuage de points en trois dimensions issus du lidar 202.

A cet effet, les caméras 201 sont d'abord étalonnées individuellement, on parle alors de paramètres d'étalonnage intrinsèque de la caméra. Dans un mode de réalisation, l'étalonnage intrinsèque est réalisé en utilisant un algorithme basé sur le modèle de sténopé de l'appareil photo. Le calibrage des paramètres intrinsèques de chaque caméra 201 comprend un traitement d'images, capturées sous différents angles, d'un objet comprenant une pluralité de points dont les coordonnées sont connues, l'objet étant généralement un damier. Ce traitement permet d'obtenir, pour chaque caméra 201, une matrice dite de caméra contenant la distance focale et les centres optiques et ainsi que des coefficients de distorsion, qui sont ensuite utilisés pour corriger la matrice de caméra précédemment obtenue afin d'éliminer les erreurs de distorsion.

Puis les caméras 201 et le lidar 202 sont étalonnés ensemble. Un étalonnage dit extrinsèque est réalisé entre les caméras et le lidar, afin que le nuage de points en trois dimensions issu du lidar puisse être projeté sur une image en deux dimensions issue d'une caméra. Les paramètres d'étalonnage extrinsèques entre les caméras 201 et le lidar 202 comprennent la position et de l'orientation de chaque capteur 201, 202, ce qui permet de définir une relation géométrique entre les différents capteurs.

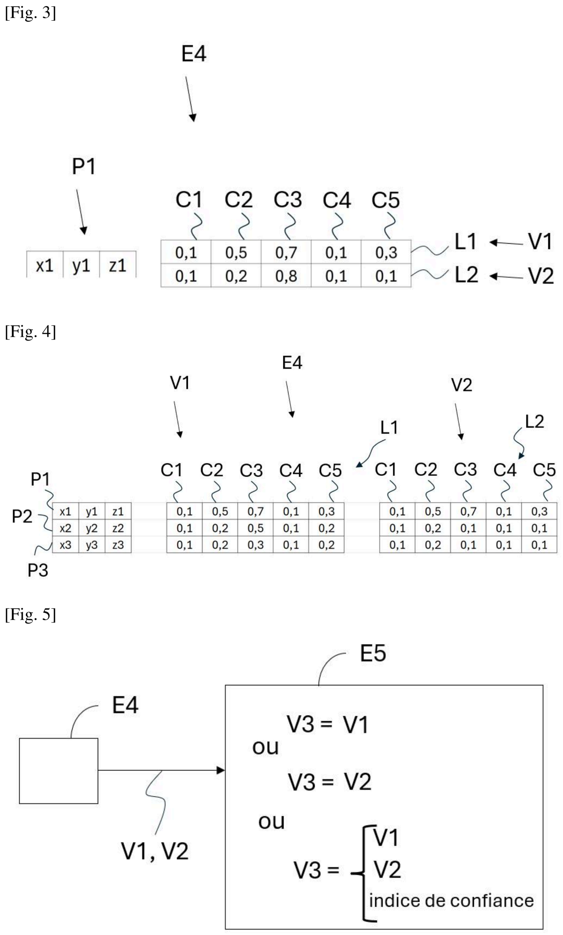

La [Fig.3] illustre le résultat obtenu après l'étape E4, pour un point donné P1 du nuage de points du lidar dont les coordonnées sont (x, y, z).

La [Fig.3] comprend un tableau dont les colonnes correspondent aux classes C1, C2, C3, C4, C5 représentant respectivement la classe « voiture », la classe « vélo », la classe « moto », la classe « camion » et la classe « personne ». Le tableau de la [Fig.3] comprend en outre une première ligne L1 correspondant aux indices de confiance respectivement associés à chaque classe du vecteur V1 et déterminés à partir de l'image issue de la caméra 201. Le tableau de la [Fig.3] comprend par ailleurs une deuxième ligne L2 correspondant aux indices de confiance respectivement associés à chaque classe du vecteur V2 et déterminés à partir de l'image issue du lidar 202.

Ainsi, le tableau permet, par exemple, de déterminer avec quel de confiance le point P1 de coordonnées (x, y, z) représente une personne. Selon la première ligne L1 du tableau, dans la colonne C5 correspondant à la classe « personne », l'indice de confiance établi à partir de l'image issue de la caméra 201 est égal à 0,3. Selon la deuxième ligne L2 du tableau, dans la colonne C5 correspondant à la classe « personne », l'indice de confiance établi à partir du nuage de points du lidar 202 est égal à 0,1.

La [Fig.4] illustre une pluralité d'associations entre un point donné P1, P2, P3 d'un nuage de points issu du lidar 202 et un pixel d'une image issue de la caméra 201 représentant respectivement le point donné P1, P2, P3.

Ainsi à l'issue de la quatrième étape E4, pour chaque point tridimensionnel de la zone donnée, et pour chaque classe évaluée, on obtient deux indices de confiance compris entre 0 et 1, le premier indice traduisant une probabilité que le point corresponde à la classe évaluée d'après les données recueillies par la caméra 201, le deuxième indice traduisant une probabilité que le point évalué corresponde à la classe évaluée d'après les données recueillies par le lidar 202.

Puis on enchaine sur l'étape E5, dans laquelle on effectue une troisième segmentation sémantique de l'environnement du véhicule automobile 100.

La troisième segmentation sémantique comprend une attribution d'un troisième vecteur de classes V3 à chaque point du nuage de points, le troisième vecteur de classes V3 étant
- le premier vecteur de classes V1, ou
- le deuxième vecteur de classes V2, ou
- un vecteur comprenant
   (i) un troisième indice de confiance indiquant si les premier et deuxième vecteurs de classes V1, V2 sont corrects,
   (ii) un quatrième indice de confiance indiquant si aucun des premier et deuxième vecteurs de classes V1, V2 sont corrects,
   (iii) un cinquième indice de confiance indiquant si seul le premier vecteur de classes V1 est correct, et
   (iv) un sixième indice de confiance indiquant si seul le deuxième vecteur de classes V2 est correct.

L'attribution du troisième vecteur de classes V3 est réalisée à partir d'un ensemble de données comprenant pour chaque point du nuage de points,
- les coordonnées tridimensionnelles associées au point,
- le premier vecteur de classe V1 correspondant au pixel associé au point, et
- le deuxième vecteur de classe V2 correspondant au point.

Dans un mode de réalisation, le troisième vecteur de classe V3 peut être déterminé par la source de données qui fournit l'indice de confiance le plus élevé. Par exemple, dans la [Fig.3], le vecteur de classe choisi serait le premier vecteur de classe V1 (correspondant à la ligne L1), contenant l'indice de confiance le plus élevé, correspondant à la classe « moto » (colonne C4).

En outre, la détermination des troisième, quatrième, cinquième et sixième indices de confiance peut prendre en compte des informations de différentes natures, par exemple des informations relatives au contexte de conduite du véhicule automobile. Pour cela, le procédé selon l'invention peut utiliser une décomposition du nuage de points en une grille de voxels, de sorte à interpréter de façon cohérente, au niveau de chaque voxel, les vecteurs de classes associés respectivement à chaque point du voxel.

Dans un mode de réalisation, la cohérence de la segmentation sémantique du nuage de points du lidar peut être mise en œuvre par des algorithmes ou modèles plus ou moins complexes.

Finalement, le procédé selon l'invention permet d'associer intelligemment une étiquette sémantique aux points d'une zone donnée d'un nuage de points issus d'un lidar, à la condition que la zone donnée soit également couverte par une caméra du véhicule automobile.

Le procédé selon l'invention met en œuvre des algorithmes simples, notamment le procédé peut avantageusement utiliser des modèles déjà existants et entraînés pour la segmentation sémantique basée sur un nuage de points issus du lidar et la segmentation sémantique basée sur une image issue d'une caméra du véhicule automobile.

Le procédé selon l'invention comprend en outre un mode dit « multiclasse » qui prend en compte des données contextuelles relatives au véhicule et à son environnement. Ce mode permet en outre de détecter des points pour lesquels aucune étiquette sémantique correcte n'est définie à partir des données issues du lidar et de la caméra.

Le procédé selon l'invention peut en outre augmenter la robustesse de tout processus qui utilise des données de segmentation sémantique. La conception modulaire facilite en outre la mise à jour des réseaux de segmentation sémantique en deux dimensions ou en trois dimensions que cette invention utilise comme source.

## Revendications

1. Procédé de segmentation sémantique d'un environnement d'un véhicule automobile (100) équipé d'un ensemble de capteurs (20) comprenant au moins un lidar (202) et une caméra (201), le procédé comprenant les étapes suivantes :
- une étape (E1) d'acquisition par la caméra (201), d'une image représentant une zone donnée de l'environnement du véhicule, et d'acquisition par le lidar (202), d'un nuage de points dans ladite zone donnée, chaque point du nuage de points étant associé à des coordonnées tridimensionnelles, puis
- une étape (E2) de première segmentation sémantique de l'image, comprenant une attribution d'un premier vecteur de classes (V1) à chaque pixel de l'image, le premier vecteur de classes associant un premier indice de confiance à chaque classe d'un ensemble donné de classes, et
- une étape (E3) de deuxième segmentation sémantique du nuage de points, comprenant une attribution d'un deuxième vecteur de classes (V2) à chaque point du nuage de points, le deuxième vecteur de classes associant un deuxième indice de confiance à chaque classe de l'ensemble donné, puis
- une étape (E4) d'association de chaque point donné (P1, P2, P3) du nuage de points à un pixel de l'image correspondant au point donné, puis,
- une étape (E5) de troisième segmentation sémantique de l'environnement du véhicule automobile (100), comprenant une attribution d'un troisième vecteur de classes (V3) à chaque point du nuage de points, le troisième vecteur de classes étant le premier vecteur de classes (V1) ou le deuxième vecteur de classes (V2) ou un vecteur comprenant un troisième indice de confiance indiquant si les premier et deuxième vecteurs (V1, V2) de classes sont corrects, un quatrième indice de confiance indiquant si aucun des premier et deuxième vecteurs de classes (V1, V2) sont corrects, un cinquième indice de confiance indiquant si seul le premier vecteur de classes (V1) est correct, et un sixième indice de confiance indiquant si seul le deuxième vecteur de classes (V2) est correct, l'attribution étant réalisée à partir d'un ensemble de données comprenant pour chaque point du nuage de points, les coordonnées tridimensionnelles associées au point, le premier vecteur de classe (V1) correspondant au pixel associé au point (P1, P2, P3) et le deuxième vecteur de classe (V2) correspondant au point (P1, P2, P3).

2. Procédé selon la revendication précédente, **caractérisé en ce que** l'étape (E5) de troisième segmentation sémantique est mise en œuvre par un algorithme, notamment un réseau de neurones convolutifs.

3. Procédé selon l'une des revendications précédentes, **caractérisé en ce que** l'étape (E2) de première segmentation sémantique et l'étape (E3) de deuxième segmentation sémantique sont exécutées indépendamment l'une de l'autre et/ou en parallèle l'une de l'autre.

4. Procédé selon l'une des revendications précédentes, caractérisé en que
- l'étape (E2) de première segmentation sémantique comprend la mise en œuvre d'un premier algorithme de segmentation sémantique, et
- l'étape (E3) de deuxième segmentation sémantique comprend la mise en œuvre d'un deuxième algorithme de segmentation sémantique, différent du premier algorithme.

5. Procédé selon la revendication précédente, **caractérisé en ce que** le premier algorithme met en œuvre un premier réseau de neurones convolutifs,
et/ou **en ce que** le deuxième algorithme met en œuvre un deuxième réseau de neurones convolutifs différent du premier réseau de neurones convolutifs.

6. Procédé selon l'une des revendications précédentes, **caractérisé en ce que** le nuage de points est réparti dans une grille tridimensionnelle de voxels, chaque voxel de la grille définissant un volume apte à contenir plusieurs points du nuage de points issu du lidar (202), et/ou **en ce que** l'étape (E5) de troisième segmentation sémantique prend en compte une cohérence des vecteurs de classes respectivement associés aux points situés dans un même voxel.

7. Procédé selon l'une des revendications précédentes, **caractérisé en ce que** l'étape (E4) d'association de chaque point donné du nuage de points à un pixel de l'image correspondant au point donné comprend un étalonnage de paramètres intrinsèques de la caméra (201) mettant en œuvre un algorithme basé sur le modèle de sténopé, l'étalonnage des paramètres intrinsèques de la caméra (201) comprenant
- une pluralité de captures, par la caméra (201), d'images d'un objet comprenant une pluralité de points dont les coordonnées sont connues, puis
- une détermination, à partir des images capturées, d'une matrice dite de caméra contenant une distance focale de la caméra (201), des centres optiques de la caméra (201) et des coefficients de distorsion de la caméra (201).

8. Dispositif (10) de segmentation sémantique d'un environnement d'un véhicule automobile (100) équipé d'un ensemble de capteurs (20) comprenant un lidar (202) et une caméra (201),
le dispositif comprenant des éléments matériels (4, 20, 21, 22, 41, 42, 43, 44, 45, 201, 202) et/ou logiciels mettant en œuvre le procédé selon l'une des revendications 1 à 7.

9. Produit programme d'ordinateur comprenant des instructions de code de programme enregistrées sur un support lisible par ordinateur pour mettre en œuvre les étapes du procédé selon l'une quelconque des revendications 1 à 7 lorsque ledit programme fonctionne sur un ordinateur.

10. Véhicule automobile (100) comprenant un dispositif selon la revendication 8.
